# EUROPEAN PATENT APPLICATION

(11) **EP 4 574 445 A1**
(43) Date of publication of application: **25.06.2025**
(21) Application number: 24221734.7
(22) Date of filing: 19.12.2024
(51) Int. Cl.: B60B 3/00, B60B 3/04, B60B 21/02

(54) **POLYGONAL WHEEL FOR VEHICLES**

(30) Priority: 22.12.2023 IT 202300027744
(71) Applicant: MW Italia S.r.l., 10098 Rivoli (TO) (IT)
(72) Inventor: RIGO, Irene, I-10025 PINO TORINESE (Torino) (IT); RONCO, Davide, I-14019 VILLANOVA D'ASTI (Asti) (IT); ASTEGIANO, Fabio, I-10045 PIOSSASCO (Torino) (IT); PALPACUER, Eric, 78300 POISSY (FR); NUBOER, Robert, 78300 POISSY (FR); BOUCHET, Christophe, 78300 POISSY (FR)
(74) Representative: Vanzini, Christian

(57) **Abstract**

A wheel (1) for vehicles comprising a rim (2) made of metal sheet and a disc (3) made of metal sheet, comprising a substantially flat central mounting part (31a) and provided for connection to an axle hub, a connecting part (31b) arranged around and adjoining the mounting part (31a), a radially outer part (31c) arranged around and adjoining the connecting part (31b), and a peripheral fitting part (32) protruding axially from the radially outer part (31c),
wherein the fitting part (32) of the disc (3) is fixed to a radially inner surface of the rim (2),
wherein the connecting part (31b) comprises a radially outer polygonal bend (31b') and a radially inner polygonal bend (31b") located respectively at a disc nose (31e) and at an intermediate position between the mounting part (31a) and the radially outer bend (31b').

## Description

The present invention relates to a wheel for vehicles comprising
a rim made of metal sheet, comprising on its axially outer side an outer flange, an outer bead seat, and a retaining hump, as well as a rim bed connected to the outer bead seat by the retaining hump, and
   a disc made of metal sheet, comprising a substantially flat central mounting part and provided for connection to an axle hub, a connecting part arranged around and adjoining the mounting part, a radially outer part arranged around and adjoining the connecting part, and connected thereto through a disc nose, said disc nose being the axially outermost portion of the disc, and a peripheral fitting part protruding axially from the radially outer part,
wherein the connecting part has a circular cross-sectional profile at the mounting part, and
wherein the fitting part of the disc is fixed to a radially inner surface of the rim.

DE 112010004325 B4 discloses a wheel according to the preamble of claim 1.

An object of the present invention is to provide a solution that allows to improve the wheel performance, in particular its fatigue resistance and static and dynamic rigidity performances.

This object is achieved according to the invention by a wheel having the features of claim 1. In this wheel, the connecting part comprises a radially outer polygonal bend and a radially inner polygonal bend located respectively at the disc nose and at an intermediate position between the mounting part and the radially outer bend,
wherein the connecting part has a polygonal cross-sectional profile at the radially outer polygonal bend and the radially inner polygonal bend, each of said radially outer polygonal bend and radially inner polygonal bend extending uninterruptedly for 360° in the circumferential direction of the disc,
wherein the radially inner polygonal bend and the radially outer polygonal bend are connected by an intermediate web portion,
wherein the connecting part has a radial cross-sectional profile having a first radius of curvature at the radially inner polygonal bend, a second radius of curvature at the intermediate web portion, and a third radius of curvature at the radially outer polygonal bend,
wherein in at least part of the circumferential extension of said radially outer polygonal bend and radially inner polygonal bend, said second radius of curvature is greater than the first radius of curvature and the third radius of curvature, and
wherein, in a plan view, the respective polygonal shape of each of said radially outer polygonal bend and radially inner polygonal bend comprises a plurality of sides and a plurality of vertices respectively interposed between adjacent sides, wherein said sides are straight and said vertices are defined by curve arcs.

The variable profile of the connecting part allows for increased fatigue resistance of the wheel and allows for improved static and dynamic rigidity of the wheel, and thereby enhancing its handling performance.

Preferred embodiments of the invention are defined in the dependent claims, which are to be regarded as an integral part of the present description.

Features and advantages of the wheel according to the invention will become clearer from the following detailed description of some embodiments of the invention, made with reference to the accompanying drawings, provided purely by way of non-limiting example, wherein:
- Figure 1 is a perspective view of a first wheel according to the invention;
- Figure 2 is a plan view of the wheel in Figure 1;
- Figure 3 is a radial sectional view of the wheel in Figure 1, taken along line III-III of Figure 2;
- Figure 4 is a perspective view of a second wheel according to the invention;
- Figure 5 is a plan view of the wheel in Figure 4;
- Figure 6 is a radial sectional view of the wheel in Figure 4, taken along line VI-VI of Figure 5;
- Figure 7 is a perspective view of a third wheel according to the invention;
- Figure 8 is a plan view of the wheel in Figure 7;
- Figure 9 is a radial sectional view of the wheel in Figure 7, taken along line IX-IX of Figure 8.

In the following description, "axial direction" refers to a direction parallel to the wheel axis. The terms "inner" and "outer" with respect to the axial direction are related to the wheel installation condition on a vehicle, wherein "inner" indicates "toward the vehicle" and "outer" indicates "away from the vehicle."

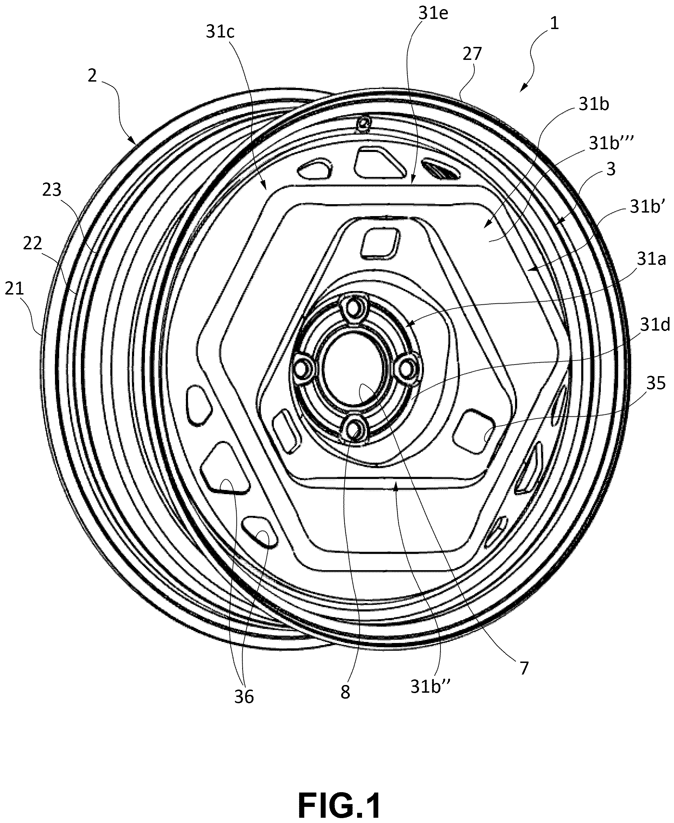

In Figures 1 to 3, reference numeral 1 denotes a wheel for vehicles according to the invention.

The wheel 1 comprises a rim 2 made of metal sheet, for example, steel or aluminium, manufactured by rolling and welding, and a disc 3 made of metal sheet, for example, steel or aluminium, manufactured by stamping and cutting.

The rim 2 conventionally comprises, in succession along the axial direction from the inside to the outside and connected to one another, an inner flange 21, an inner bead seat 22, an inner retaining hump 23, a rim bed 24, an outer retaining hump 25, an outer bead seat 26, and an outer flange 27.

The disc 3 comprises a cover portion arranged on the axially outer side of the rim 2 and a peripheral fitting part 32 protruding axially inward from the cover portion and inserted coaxially within the rim 2. This peripheral fitting part 32 is fixed to a radially inner surface of the rim (in particular at the rim bed 24 or the outer bead seat 26), for example, by welding or crimping.

The cover portion of the disc 3 comprises a central mounting part 31a, which is substantially flat and provided for connection via bolts to an axle hub (not shown), and a curved-profile portion that connects the mounting part 31a to the peripheral fitting part 32 of the disc.

The mounting part 31a has a central aperture 7 and, around it, a plurality of holes 8 for passing the fastening bolts.

The curved-profile portion comprises a connecting part 31b arranged around and adjoining the mounting part 31a, and a radially outer part 31c arranged around and adjoining the connecting part 31b. Consequently, the fitting part 32 protrudes axially from the radially outer part 31c and is connected to the mounting part 31a by the connecting part 31b and the radially outer part 31c.

In the embodiment shown, the boundary between the mounting part 31a and the connecting part 31b is defined by a circumferential groove 31d extending around the mounting part 31a.

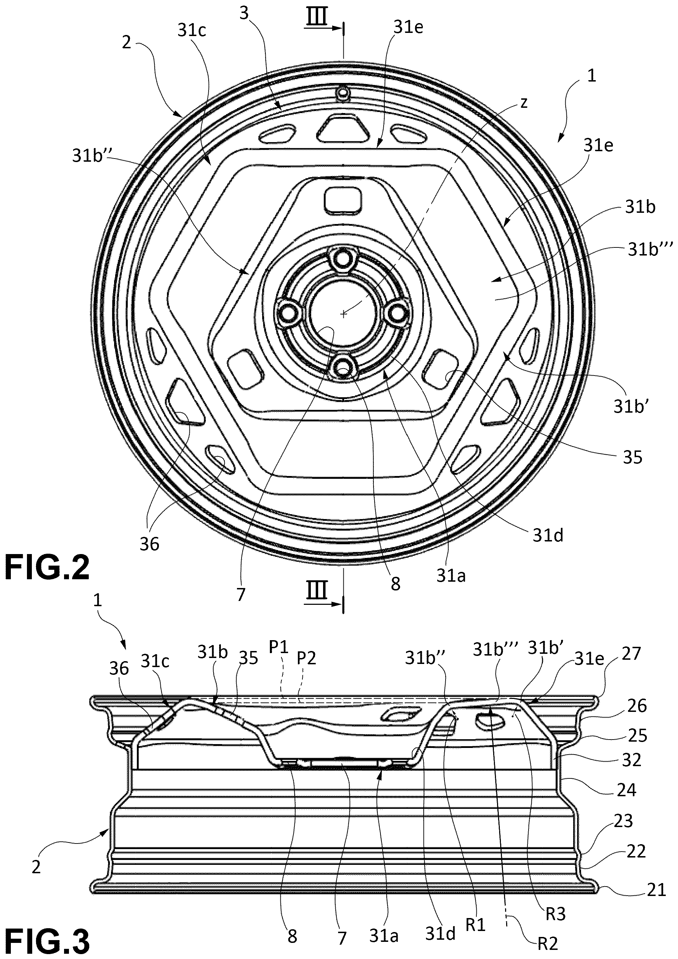

The boundary between the connecting part 31b and the radially outer part 31c is defined by a disc nose 31e, which-as seen in Figure 3-is the axially outermost portion of the disc 3. Thus, the connecting part 31b is connected to the radially outer part 31c by the disc nose 31e.

The connecting part 31b defines a surface that, in radial section, has a curved profile that extends axially outward of the wheel 1from the mounting part 31a or, more precisely, from the circumferential groove 31d.

The connecting part 31b comprises a radially outer polygonal bend 31b' and a radially inner polygonal bend 31b" extending around the axis z of the wheel and coaxially with it. The radially outer polygonal bend 31b' and the radially inner polygonal bend 31b" are positioned respectively at the disc nose 31e and at an intermediate position between the mounting part 31a and the radially outer bend 31b'.

The connecting part 31b has a polygonal cross-sectional profile at the radially outer polygonal bend 31b' and the radially inner polygonal bend 31b". Each of these bends, the radially outer polygonal bend 31b' and the radially inner polygonal bend 31b", extends uninterruptedly for 360° in the circumferential direction of the disc 3. Consequently, the connecting part 31b has a cross-sectional profile (i.e., in a section taken in a plane orthogonal to the axis z of the wheel) that transitions from a circular shape at the mounting part 31a (that is in the illustrated embodiment, at the circumferential groove 31d) to a first polygonal shape at the radially inner polygonal bend 31b", and then to a second polygonal shape at the radially outer polygonal bend 31b', and subsequently at the disc nose 31e. In the example illustrated in Figures 1-3, the first polygonal shape and the second polygonal shape are two irregular hexagons which have a threefold rotational symmetry with respect to the axis z.

For the purposes of the present description, a polygonal shape does not strictly mean an exact polygonal shape but rather a shape in which sides and vertices can be identified, wherein the sides are straight, and the vertices are defined by respective curve arcs.

In the example shown, as seen in the plan view of Figure 2, the sides of the polygonal shape of the radially outer polygonal bend 31b' are arranged respectively parallel to the sides of the polygonal shape of the radially inner polygonal bend 31b".

The radially outer polygonal bend 31b' and the radially inner polygonal bend 31b" extend on respective planes P1, P2 orthogonal to the axis z of the wheel, represented by dashed lines in Figure 2.

The radially inner polygonal bend 31b" and the radially outer polygonal bend 31b' are connected to one another by an intermediate web portion 31b‴.

As shown in Figure 3, the connecting part 31b has a radial cross-sectional profile having a first radius of curvature R1 at the radially inner polygonal bend 31b", a second radius of curvature R2 at the intermediate web portion 31b‴, and a third radius of curvature R3 at the radially outer polygonal bend 31b'.

In at least part of the circumferential extension of the polygonal bends 31b and 31b", the second radius of curvature R2 is greater than the first radius of curvature R1 and the third radius of curvature R3. Actually, as seen when comparing Figures 2 and 3, there are areas of the intermediate web portion 31b‴ wherein this intermediate web portion 31b" has a greater radial extension, wherein therefore the radial distance between the radially inner polygonal bend 31b" and the radially outer polygonal bend 31b' is greater. At least at such areas, the radius of curvature R2 of the intermediate web portion 31b‴ is greater, in particular significantly greater (in particular tending towards infinity), than the radii of curvature R1 and R3 of the polygonal bends 31b" and 31b'. In other words, at least in the aforementioned areas, the intermediate web portion 31b‴ is flat or nearly flat.

In the radially outer part 31c, there is the transition from the polygonal shape of the radially outer polygonal bend 31b', and consequently the disc nose 31e, to the circular shape of the peripheral fitting part 32.

The connecting part 31b and the radially outer part 31c may feature respective apertures. In the illustrated example, the apertures formed in the connecting part 31b have been denoted by 35, and the apertures in the radially outer part 31c have been denoted by 36.

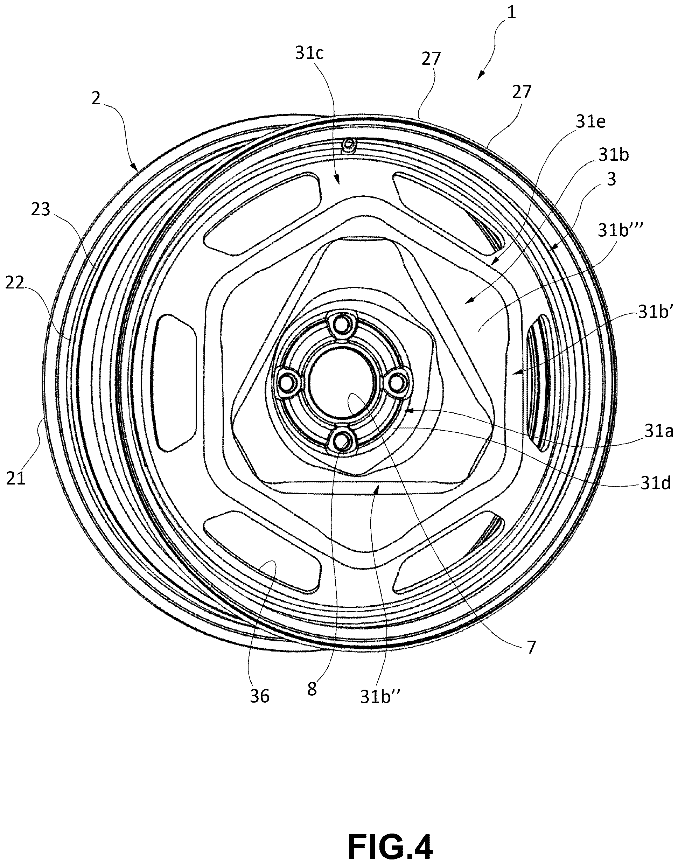

Figures 4-6 depict a second embodiment. Components corresponding to those in the first embodiment are assigned the same reference numerals, and these components will not be described further.

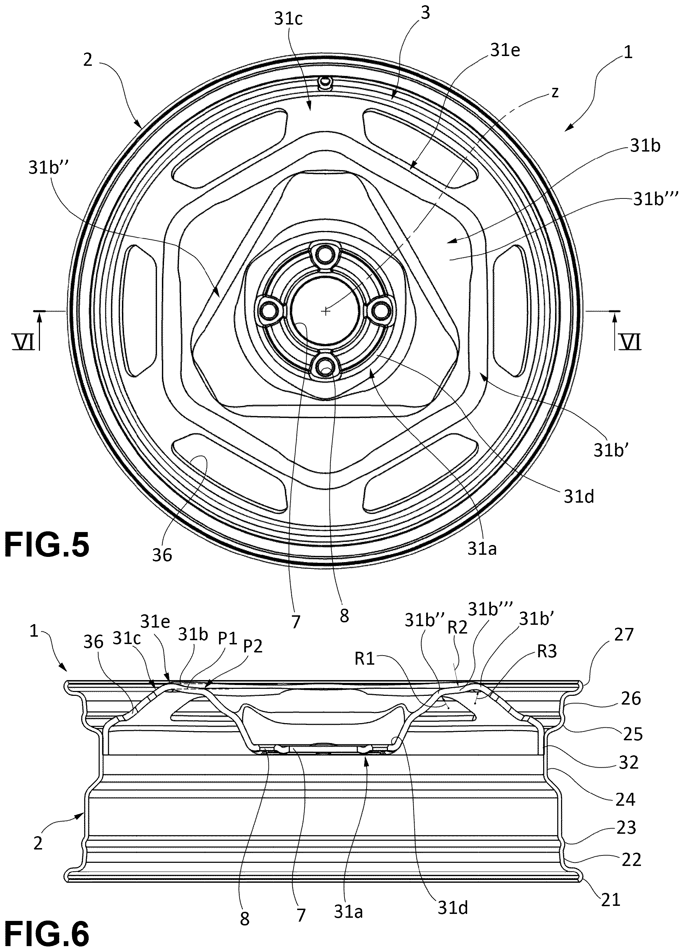

The second embodiment differs from the first in that the first polygonal shape (i.e., that of the radially inner polygonal bend 31b") and the second polygonal shape (i.e., that of the radially outer polygonal bend 31b') are an irregular hexagon having threefold rotational symmetry with respect to the axis z and a regular hexagon, respectively. Moreover, as seen in the plan view of Figure 5, the vertices of the polygonal shape of the radially outer polygonal bend 31b' are respectively arranged aligned with the midpoints of the sides of the polygonal shape of the radially inner polygonal bend 31b". Additionally, the intermediate web portion 31b‴ is curved, although its radius of curvature R2 remains greater than the radii of curvature R1 and R3 of the polygonal bends 31b" and 31b' (at least at the areas of the intermediate web portions 31b‴ wherein the radial distance between the polygonal bends 31b" and 31b' is greater).

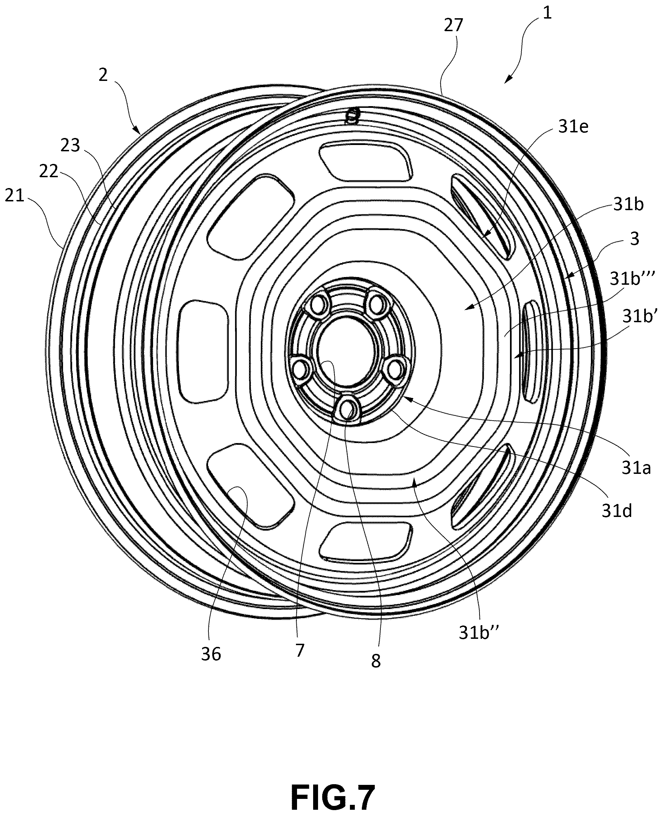

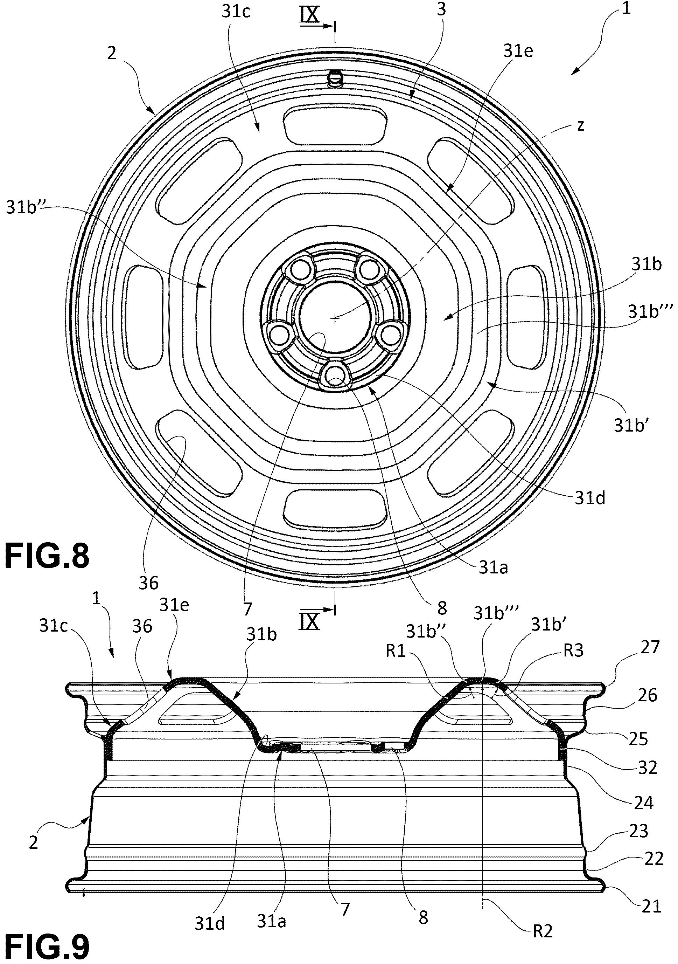

Figures 7-9 depict a third embodiment. Components corresponding to those in the first embodiment are assigned the same reference numerals; these components will not be described further.

The third embodiment differs from the preceding embodiments in that the first polygonal shape (i.e., that of the radially inner polygonal bend 31b") and the second polygonal shape (i.e., that of the radially outer polygonal bend 31b') are regular octagons. Furthermore, the intermediate web portion 31b‴ is flat along the entire circumferential extension of the polygonal bends 31b" and 31b' and, in particular, extends on a plane orthogonal to the axis z of the wheel. In fact, the polygonal bends 31b" and 31b' and the intermediate web portion 31b‴ lie in the same plane and together define the disc nose 31e.

## Claims

1. Wheel (1) for vehicles comprising
a rim (2) of metal sheet, comprising on its axially outer side an outer rim flange (27), an outer bead seat (26) and a retaining hump (25), as well as a rim bed (24) connected to the outer bead seat (26) through the retaining hump (25), and
a disc (3) of metal sheet, comprising a central mounting part (31a) which is substantially flat and provided for connection to an axle hub, a connecting part (31b) arranged around and adjoining the mounting part (31a), a radially outer part (31c) arranged around the connecting part (31b) and connected thereto through a disc nose (31e), said disc nose (31e) being the axially outermost portion of the disc (3), and a peripheral fitting part (32) protruding axially from the radially outer part (31c),
wherein the connecting part (31b) has a circular-shaped cross-sectional profile at the mounting part (31a), and
wherein the fitting part (32) of the disc (3) is fixed to a radially inner surface of the rim (2),
wherein the connecting part (31b) comprises a radially outer polygonal bend (31b') and a radially inner polygonal bend (31b") at the disc nose (31e) and at an intermediate position between the mounting part (31a) and the radially outer bend (31b'), respectively,
wherein the connecting part (31b) has a polygonal-shaped cross-sectional profile at the radially outer polygonal bend (31b') and at the radially inner polygonal bend (31b"), each of said radially outer polygonal bend (31b') and radially inner polygonal bend (31b") extending uninterruptedly for 360° in the circumferential direction of the disc (3),
wherein the radially inner polygonal bend (31b") and the radially outer polygonal bend (31b') are connected to each other by an intermediate web portion (31b‴),
wherein the connecting part (31b) has a profile in radial section having a first radius of curvature (R1) at the radially inner polygonal bend (31b"), a second radius of curvature (R2) at the intermediate web portion (31b‴), and a third radius of curvature (R3) at the radially outer polygonal bend (31b'), and
wherein in at least part of the circumferential extension of said radially outer polygonal bend (31b') and radially inner polygonal bend (31b"), said second radius of curvature (R2) is greater than said first radius of curvature (R1) and said third radius of curvature (R3),
**characterized in that**, according to a plan view, the respective polygonal shape of each of said radially outer polygonal bend (31b') and said radially inner polygonal bend (31b") comprises a plurality of sides and a plurality of vertices respectively interposed between adjacent sides, wherein said sides are straight and wherein said vertices are defined by curve arcs.

2. Wheel according to claim 1, wherein, according to a plan view, the sides of the polygonal shape of the radially outer polygonal bend (31b') are respectively arranged parallel to the sides of the polygonal shape of the radially inner polygonal bend (31b").

3. Wheel according to claim 1, wherein, according to a plan view, the vertices of the polygonal shape of the radially outer polygonal bend (31b') are respectively arranged aligned with the midpoints of the sides of the polygonal shape of the radially inner polygonal bend (31b").

4. Wheel according to any one of the preceding claims, wherein each of said radially outer polygonal bend (31b') and radially inner polygonal bend (31b") extends on a respective plane (P1, P2) orthogonal to the axis (z) of the wheel or on a same plane orthogonal to the axis (z) of the wheel.
